# EUROPEAN PATENT SPECIFICATION

(11) **EP 3 072 790 B1**
(45) Date of publication and mention of the grant of the patent: **25.03.2020**
(21) Application number: 15191312.6
(22) Date of filing: 23.10.2015
(51) Int. Cl.: B62J 6/06, H01F 38/18, B60B 1/00

(54) **VEHICLE IN THE FORM OF A CYCLE OR MOTORCYCLE**
FAHRZEUG IN FORM EINES FAHRRADS ODER MOTORRADES
VÉHICULE SOUS FORME DE VÉLO OU DE MOTO

(30) Priority: 24.10.2014 IT MO20140306
(43) Date of publication of application: 28.09.2016
(73) Proprietor: Venturelli, Massimo, 41125 Modena (IT)
(72) Inventor: Venturelli, Massimo, 41125 Modena (IT)
(74) Representative: Zoli, Filippo

(56) References cited:
- DE-A1-102013 202 854
- KR-B1- 101 448 608
- US-A- 4 516 647
- US-A1- 2010 123 371
- US-A1- 2011 174 554

## Description

The present invention relates to a vehicle, being a cycle or motorcycle.

Bicycles are known the wheels of which have transmission means designed to supply electricity to receiver devices such as lighting devices or other accessories.

In particular, these means exploit the rotary movement of the wheel to produce the electricity to be supplied to the connected devices.

Generally, the above-mentioned means provide for a transmission of electrical current from a rotor to a stator, i.e., from one or more moving parts to one or more fixed parts.

The best known example of electrical transmission means applied to the wheel of a cycle or motorcycle is the "dynamo".

The dynamo is an energy transducer, i.e., a rotating machine which converts mechanical force into electricity in the form of direct current.

In particular, a conductor element is made to rotate immersed in a permanent magnetic field generated by the stator. The conductor element, which is usually a coil wrapped around a shaft, is made to rotate by the rotary movement of the wheel.

This way, a direct current is generated with which a light bulb or any other low-power device can be supplied.

The dynamo has some drawbacks.

A first drawback is linked to the fact that the dynamo, to work, must always be in contact with the wheel.

Contact is never optimal due to various factors such as dirt, loosening of mechanical parts, etc., so often the power supply is discontinuous and/or insufficient.

Another drawback of the dynamo is linked to the fact that it is positioned in the vicinity of the wheel resulting bulky and uncomfortable, both because it generates friction, which slows down the motion of the wheel, and because it can be easily damaged.

Bicycles are also known on the wheels of which are installed power generator devices such as solar panels able to generate the electricity used to power one or more user devices such as lights, an odometer, a rechargeable battery, etc.

The transmission of electricity by the generator device to the fixed parts connected to the user devices, i.e., from the rotor to the stator, turns out to be problematic because it is necessary to combine the need to transfer electricity in an efficient way with the confined and restricted spaces provided by a bicycle. Some known means, commonly called "slip rings", for the transmission of electricity from a rotor to a stator provide for real conductive rings electrically connected to the moving parts (rotors) together with sliding elements (brushes) installed in the stators.

These sliding elements, generally made of copper or graphite, are placed in contact with the conductive rings, so as to create a friction between the rotating parts (rings) and the fixed parts (brushes).

For this reason systems must be used able to ensure sufficient mechanical pressure on the sliding elements so as to keep them in contact with the rings. The most common systems involve the use of springs or other bulky elements which act on the brushes, pressing them against the conductive rings.

One drawback of these transmission means is tied to the room taken up by the springs or by the other systems used to ensure contact between the parts.

The above described means, in fact, appear impractical to use in confined and restricted spaces such as those available in a bicycle.

A further drawback of the transmission means of known type consists in the formation of electric arcs, due to the presence of asperities between the parts in contact, and which cause damage to the transmission means themselves.

The formation of such electric arcs can be further promoted by the use of springs to keep the sliding parts in reciprocal contact, inasmuch as they do not allow a linear distribution between the forces and therefore flat contact between the parts.

Another drawback in the use of springs to keep the rotating parts in contact with the fixed ones consists in the fact that their action decreases with the increase in wear of the contact parts, since the force exerted by a spring decreases as this gradually expands.

Another drawback tied to the use of these systems of known type consists in the fact that they are particularly prone to problems of oxidation, lubrication and deformations which can jeopardize their correct operation.

DE 10 2013 202854 A1 which discloses the preamble of claim 1 and US 4 516 647 A disclose both a vehicle comprising a frame, at least a wheel having a load-bearing structure (2) and a hub (3) intended to be associated in a rotatable manner with the frame and at least an electrical energy generator device locked together with the wheel itself. Such vehicles further comprise electrical energy transmission means from the generator device to a user device associated with the frame and comprising a first conductor unit locked together with the hub and connected to the generator device and a second conductor unit which locked together with the frame and connected to a user device, where the first conductor unit is able to transfer the electrical energy to the second conductor unit.

The main aim of the present invention is to provide a wheel for cycles and motorcycles which allows transferring electricity from a generator device locked together with the wheel itself to a user device locked together with the frame or vice versa, and which is at the same time of limited dimensions and weight.

Another object of the present invention is to ensure a long-lasting contact between the rotating parts and the fixed parts irrespective of the wear of the same.

Yet another object of the present invention is to provide a wheel for cycles and motorcycles wherein the means for transmitting energy from the rotating part to the fixed part are less exposed to oxidation, lubrication and deformation problems compared to means of known type.

Another object of the present invention is to provide a wheel for cycles and motorcycles which allows to overcome the mentioned drawbacks of the prior art within the ambit of a simple, rational, easy, effective to use and affordable solution.

The objects stated above are achieved by a vehicle having the characteristics of claim 1.

Other characteristics and advantages of the present invention will become better evident from the description of a preferred, but not exclusive, embodiment of a wheel for cycles and motorcycles as used in the invention, illustrated by way of an indicative, but nonlimiting, example in the accompanying drawings in which:
Figure 1 is a general view of a bicycle according to the invention;
Figure 2 is an axonometric view of a wheel according to the invention;
Figures 3 5 and 7 are an exploded view of a detail of a wheel, of which only the one in figure 3 is according to the invention;
Figures 4 6 and 8 are a sectional view of a detail a wheel, of which only the one in figure 4 is according to the invention.

With particular reference to such figures, reference number 1 globally indicates a wheel for cycles and motorcycles mountable, e.g., on conventional two-wheel vehicles such as bicycles.

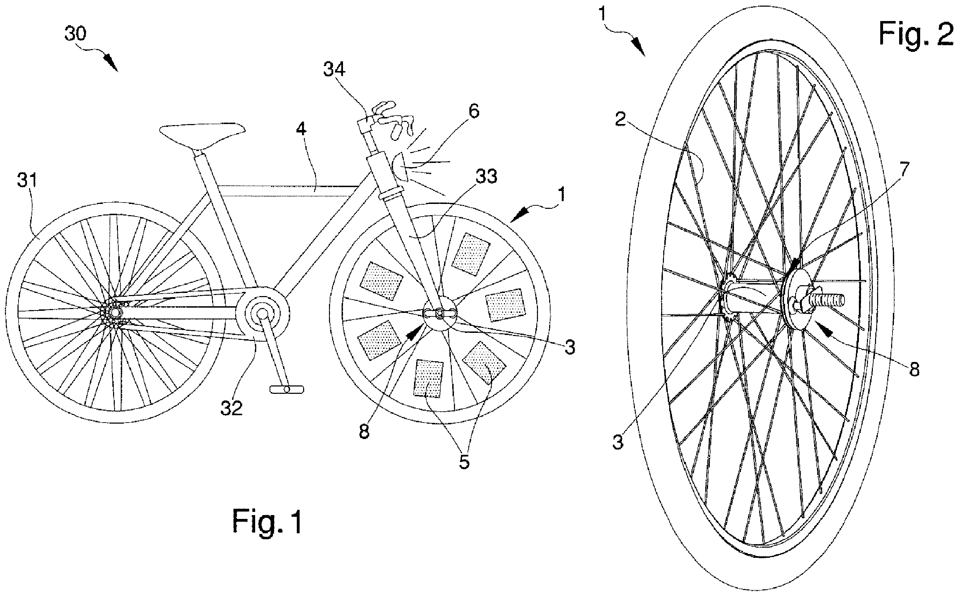

Figure 1 shows a bicycle of conventional type, identified by the reference number 30, comprising a frame 4 on which are mounted the various parts that allow the means to function, i.e. two wheels 1, 31 aligned with each other and power transmission means 32 for transmitting power to the drive wheel.

The rear wheel 31 is associated with the frame 4 and is positioned along a fixed direction, i.e., along the longitudinal direction of the frame.

The front wheel 1, instead, is associated with the frame 4 by means of a fork element 33 and is positionable, by means of a handlebar element 34, in several directions which are rotated with respect to the longitudinal direction of the frame.

The elements common to the various described embodiments are identified by the same reference numbers.

As shown in figure 1, the wheel 1 for cycles and motorcycles comprises a load-bearing structure 2 having a hub 3 intended to be associated in a rotatable manner with the frame 4 of a vehicle and at least an electrical energy generator device 5 locked together with the load-bearing structure 2.

In these embodiments, the energy generator device 5 is of the type of a photovoltaic panel locked together with the wheel 1 and arranged between the spokes of the wheel itself.

The wheel 1 comprises electrical energy transmission means 7, 8 from the generator device 5 to a user device 6 associated with the frame 4 of the bicycle 30.

The transmission means 7, 8 have a first conductor unit 7 and a second conductor unit 8.

The first conductor unit 7 is locked together with the hub 3 and is connected to the generator device 5.

The second conductor unit 8 is locked together with the frame 4 and is connected to at least one user device 6.

The first conductor unit 7 is able to transfer the electrical energy to the second conductor unit 8 by effect of its rotation with respect to the latter.

The solution is not ruled out wherein the generator device is associated with the frame 4 and the user device 6 is associated with the load-bearing structure 2.

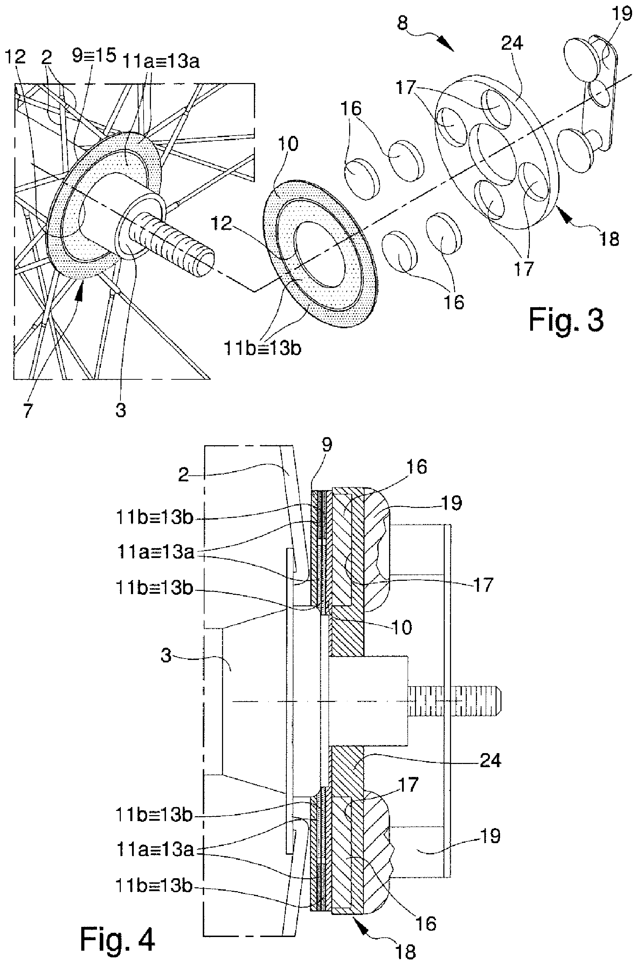

According to a first and a second embodiment, shown in Figures 3 to 6, the first conductor unit 7 is placed in contact with the second conductor unit 8 and the electrical energy is transferred by effect of the sliding of the first conductor unit 7 onto the second conductor unit 8.

The wheel 1 also comprises reciprocal approaching means 15, 16 of the sheet-shaped elements 9, 10.

In particular, the approaching means 15, 16 comprise at least a ferromagnetic element 15 associated with one of the sheet-shaped elements 9, 10 and at least a magnetic element 16 associated with the other of the sheet-shaped elements 9, 10.

In the first embodiment, the first and second conductor units 7, 8 have a first and a second sheet-shaped element 9, 10 respectively, with corresponding conductive portions 11a, 11b placed in contact to one another.

The sheet-shaped elements 9, 10 shown in the illustrations have a discoid shape, but alternative solutions cannot be ruled out wherein the shape is different.

The first and a second sheet-shaped elements 9, 10 also comprise a respective through hole 12 able to be fitted on the hub 3.

In particular, the first sheet-shaped element 9 is locked together with the hub 3 and the second sheet-shaped element 10 is associated idle with the hub itself. The first conductive portion 11a, relative to the first conductor unit 7, is of the type of a first track 13a obtained on the first sheet-shaped element 9 itself.

The second conductive portion 11b, relative to the second conductor unit 8 is also of the type of a second track 13b made of a conductive material and able to slide on the first track 13a by effect of the rotation of the first conductor unit 7 with respect to the second conductor unit 8.

Advantageously, each of the conductive portions 11a, 11b comprises two tracks 13a, 13b positioned one inside the other and mutually spaced apart.

In particular, on the first sheet-shaped element 9 are defined two tracks 13a which are concentric the one to the other.

Similarly, in a specular manner to the first sheet-shaped element 9, on the second sheet-shaped element 10 are defined two tracks 13b which are concentric the one to the other.

The conductive portions 11a, 11b, furthermore, define a circular perimeter and are made of copper or other conductive material such as gold, silver and bronze. Alternative solutions cannot be ruled out wherein, for example, there is a plurality of concentric conductive portions 11a, 11b on each conductor unit 7, 8. Preferably, the ferromagnetic element 15 is associated with the first sheet-shaped element 9.

In particular, in the first embodiment it is the first sheet-shaped element 9 which is made at least partially of ferromagnetic material.

Conveniently, the magnetic element 16 is associated with the second sheet-shaped element 10 on the opposite side of the relevant conductive portion 11b.

In the embodiment in figure 2 and 3, the approaching means 15, 16 comprise four magnetic elements 16 made of neodymium and placed in contact with the outer surface of the second sheet-shaped element 10, i.e., with the surface opposite to that in contact with the first sheet-shaped element 9.

The magnetic elements 16 are disc-shaped and have very small dimensions and weight if compared to those of the wheel 1.

The magnetic elements 16 therefore exert a force of attraction on the ferromagnetic material present in the first sheet-shaped element 9 so that the sheet-shaped elements 9, 10 are kept one in contact with the other even during the rotation of the first element with respect to the second. Alternative embodiments cannot however be ruled out wherein the magnetic elements 16 have different dimensions, material and shape to those described.

The magnetic elements 16 are housed in suitable housing seats 17 obtained on a sustaining element 18.

The sustaining element 18 comprises an annular element 24 able to be fitted idle over the hub 3 and locked together with the frame 4.

The disc-shaped element 24 is locked together with a pusher element 19 secured to the frame 4 of the bicycle.

This way the sustaining element 18 is locked together with the frame 4 of the vehicle so as to remain fixed with respect to the first sheet-shaped element 9 when the wheel 1 is moving forward.

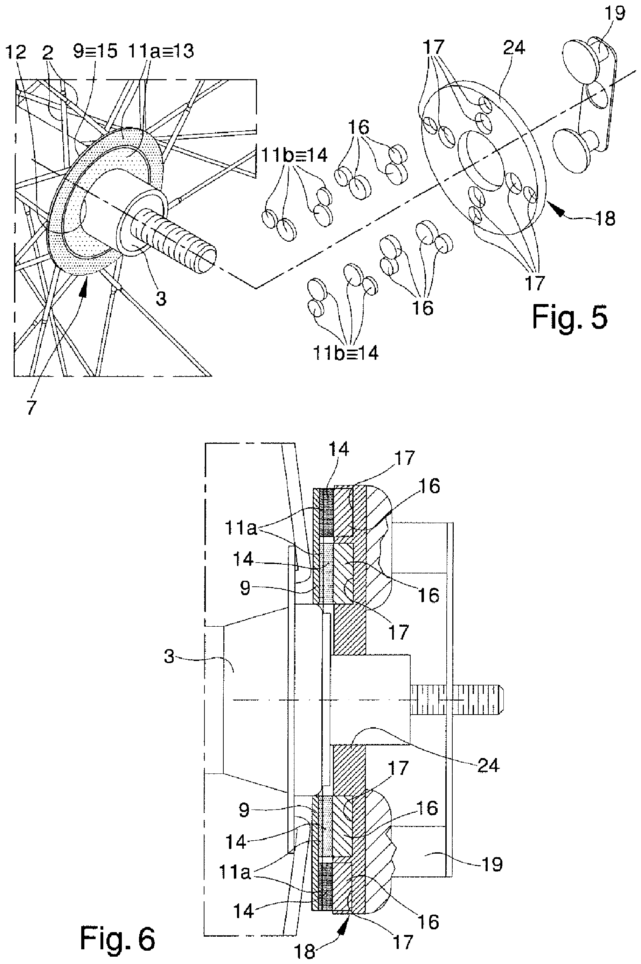

In the second embodiment, which is not part of the invention, shown in the figures 5 and 6, the first conductor unit 7 also comprises a first sheet-shaped element 9 and a relevant conductive portion 11a.

The latter is of the type of a track 13 similar to that of the first described embodiment.

In particular, on the first sheet-shaped element 9 two conductive portions 11a are obtained of the track type 13 and arranged concentrically the one to the other.

The second conductive portion 11b, on the other hand, is of the type of at least one pad 14 made of a conductive material and able to slide on the first conduction portion 11a by effect of the rotation of the first conductor unit 7 with respect to the second conductor unit 8.

The reverse solution cannot be ruled out wherein the first conductor unit 7 comprises a first conductive portion 11a of the pad type 14 and the second conductor unit 8 comprises a second sheet-shaped element 10 on which is obtained a second conductive portion 11b of the type of a track 13 made of a conductive material.

Preferably, the second conductive portion comprises a plurality of pads 14 arranged spaced apart along a substantially circular profile.

More in detail, the pads 14 are arranged along two circumferences substantially concentric the one to the other, so that the pads 14 arranged along each of said circumferences are in contact with a respective track 13.

Conveniently, the approaching means 15, 16 comprise a plurality of magnetic elements 16 equal in number to the pads 14 and associated with these.

In the embodiment in figures 5 and 6, there are eight magnetic elements 16 associated with as many pads 14 made of a conductive material.

The pads 14, interposed between a magnetic element 16 and the ferromagnetic element 15, are, therefore, kept in contact with the first conductive portion 11a so as to allow the transfer of electricity from the rotor to the stator.

Alternative solutions cannot however be ruled out with a different number of magnetic elements 16 and relevant pads 14.

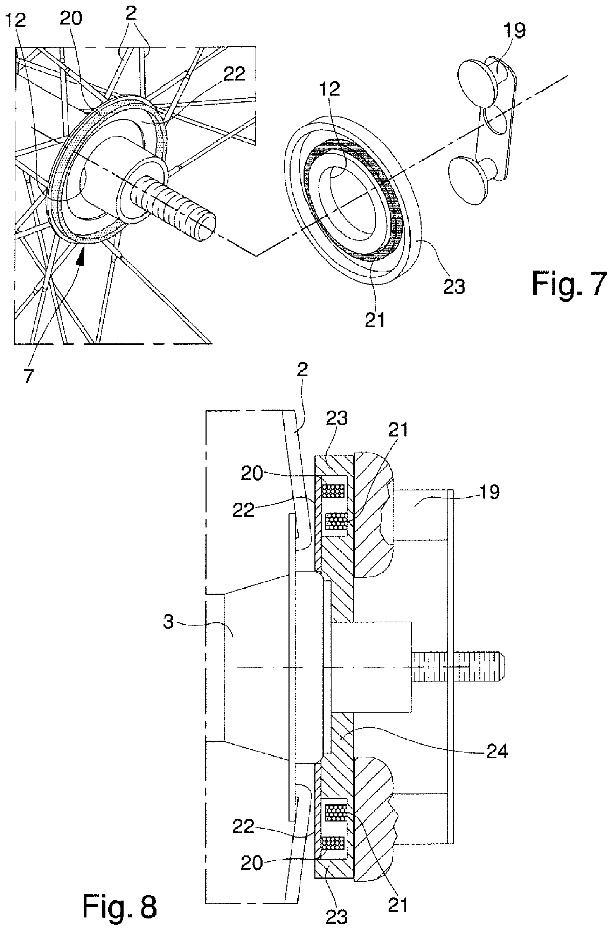

In a third embodiment, which is not part of the invention, shown in figures 7 and 8, the second conductor unit 8 is concentric to the first conductor unit 7 and the first conductor unit 7 is able to transfer electricity to the second conductor unit 8 by effect of electromagnetic induction.

In particular, the first conductor unit 7 comprises a first coil element 20 able to receive electricity from the generator device 5 and is locked together with the hub 3.

More in detail, the first coil element 20 is fixed to a first support element 22 locked together with the hub 3.

The second conductor unit 8 comprises a second coil element 21 able to receive electricity by effect of electromagnetic induction from the first coil element 20 and which can be locked together with the frame 4.

More in detail, the second coil element 21 is fixed to a second support element 23 which can be locked together with the frame 4.

In particular, the second support element 23 can be fitted on the hub 3 and can be locked together with the frame 4.

In fact, both the first support element 22 and the second support element 23 have a substantially annular shape.

A pusher element 19 is associated with the second support element 23 so as to make it integral with the frame 4.

Both support elements 22, 23 are made of a ferromagnetic material and are associated in such a way as to define a substantially closed chamber inside which the coil elements 20, 21 are housed.

This way, the union of the first and second conductor units 7, 8 is such as to substantially have the configuration of a hollow toroid.

The first coil element 20 is crossed by the current produced by the generator device 5 and therefore, through an electronic device for converting the current produced into alternating current, gives rise to magnetic field variations which, in turn, will lead to the formation of currents induced in the second coil element 21, electrically connected to the user devices.

The operation of the present invention is as follows.

The wheel 1, in moving forwards, drags in rotation the first conductor unit 7, which, being connected to the generator device 5, is crossed by electric current which is transferred to the second conductor unit 8.

The latter is connected to the various user devices and therefore the energy transferred from the first conductor unit 7 to the second conductor unit 8 can be used.

In the first previously described embodiment the transfer of energy takes place by effect of the sliding of the first conductive portion 11a, obtained on the first sheet-shaped element 9, on the second conductive portion 11b, obtained on the second sheet-shaped element 10.

The two portions are kept in contact thanks to the action of attraction which the magnetic elements 16 exert on the ferromagnetic element 15.

In the second previously described not claimed embodiment, the transfer of energy takes place by effect of the sliding of the first conductive portion 11a on the pads 14. Similarly to what described above, the pads 14 are kept in contact with the first sheet-shaped element 9 by effect of the action which the magnetic elements 16 exert on the ferromagnetic element 15.

In the third previously described not claimed embodiment the transfer of energy takes place by effect of the electromagnetic induction induced by the first coil element 20 with respect to the second coil element 21.

The support elements 22, 23 are associated in such a way that the whole is configured as an electrical transformer where the windings are linked together with the ferromagnetic material and wherein, thanks to the hollow toroid configuration, the magnetic field lines are closed in a loop.

The first coil element 20, being crossed by the current produced by the generator device 5 can rotate freely within the second coil element 21, generating induced magnetic field variations which in turn induce electric currents inside the second coil element 21, with the latter connected to the user devices 6.

In this third not claimed embodiment, the current is transferred between two elements without these in any way touching one another.

In has in practice been ascertained how the described invention achieves the proposed objects and in particular the fact is underlined that the wheel for cycles and motorcycles described above permits the transfer of electricity from the generator device to a user device thanks to the sliding action of a first conductor unit with respect to a second conductor unit. Another advantage of the present invention is that, thanks to the use of magnets and sheet-shaped elements a reduced-encumbrance coupling can be made between the first and the second conductor unit suitable for the confined and limited spaces of the bicycle.

The use of magnets of small dimensions, in particular, permits maintaining the contact between the conductor units without using special spring devices or the like, which are heavier and bulkier.

Furthermore, the magnets help ensure a long-lasting contact because the thrust they exert on the various components remains constant, unlike what happens, for example, using spring systems wherein the thrust is reduced in proportion to the wear of the conductive portion.

Finally, with reference to the third not claimed embodiment described, having an energy transfer without these having to touch each other, advantages are obtained related to the fact that this way they can be enclosed in sealed casings, thus determining effective protection from external elements such as water and dust.

## Claims

1. Vehicle, being a cycle or motorcycle, comprising:
- a frame (4) and
- at least a wheel (1) comprising a load-bearing structure (2) having a hub (3) intended to be associated in a rotatable manner with said frame (4) and at least an electrical energy generator device (5) locked together with said load-bearing structure (2),
- electrical energy transmission means (7, 8) from said generator device (5) to a user device (6) associated with said frame (4) and comprising a first conductor unit (7) locked together with said hub (3) and connected to said generator device (5) and a second conductor unit (8) locked together with said frame (4) and connected to at least a user device (6), where said first conductor unit (7) is able to transfer the electrical energy to said second conductor unit (8), where said first conductor unit (7) is placed in contact with said second conductor unit (8), the electrical energy being transferred by effect of the sliding of said first conductor unit (7) onto said second conductor unit (8) and where said first and second conductor unit (7, 8) comprise corresponding conductive portions (11a, 11b) placed in contact to one another;
**characterized by** the fact that said first and second conductor units (7, 8) comprise a first and a second sheet-shaped element (9, 10) respectively, where said conductive portions (11a, 11b) are the type of tracks (13a, 13b) defining a closed profile and formed on the sheet-shaped elements (9, 10) themselves, by the fact that said sheet-shaped elements (9, 10) comprise a respective through hole (12) able to be fitted on said hub (3), the first sheet-shaped element (9) being locked together with said hub (3) and said second sheet-shaped element (10) being associated idle with the hub itself, and by the fact that said wheel (1) comprises reciprocal approaching means (15, 16) of said conductive portions (11a, 11b) having at least a ferromagnetic element (15) associated with one of said conductive portions (11a, 11b) and at least a magnetic element (16) associated with the other of said conductive portions (11a, 11b).

2. Vehicle (1) according to claim 1, **characterized by** the fact that each of said conductive portions (11a, 11b) comprises a pair of said tracks (13a, 13b) arranged one inside the other and spaced apart from one another.

3. Vehicle (1) according to claim 1 or 2, **characterized by** the fact that said ferromagnetic element (15) is associated with said first sheet-shaped element (9) and that said magnetic element (16) is associated with said second sheet-shaped element (10) on the opposite side of the corresponding conductive portion (11b).

4. Vehicle (1) according to claim 3, **characterized by** the fact that said approaching means (15, 16) comprise at least a sustaining element (18) defining at least a housing seat (17) of said at least one magnetic element (16).

5. Vehicle (1) according to claim 4, **characterized by** the fact that said sustaining element (18) comprises at least an annular element (24) able to be fitted idle on said hub (3) and locked together with said frame (4).

6. Vehicle (1) according to one or more of the preceding claims, **characterized by** the fact that said magnetic element (16) comprises neodymium.

## Patentansprüche

1. Fahrzeug, das ein Fahrrad oder Motorrad ist, umfassend:
- einen Rahmen (4) und
- mindestens ein Rad (1), das eine lasttragende Struktur (2) mit einer Nabe (3), die dazu bestimmt ist, drehbar mit dem Rahmen (4) verbunden zu werden, und mindestens eine elektrische Energiegeneratorvorrichtung (5) umfasst, die mit der lasttragenden Struktur (2) verriegelt ist,
- elektrische Energieübertragungsmittel (7, 8) von der Generatorvorrichtung (5) zu einer dem Rahmen (4) zugeordneten Benutzervorrichtung (6),
und umfassend eine erste Leitereinheit (7), die mit der Nabe (3) verriegelt und mit der Generatorvorrichtung (5) verbunden ist, und eine zweite Leitereinheit (8), die mit dem Rahmen (4) verriegelt und mit mindestens einer Benutzervorrichtung (6) verbunden ist, wobei die erste Leitereinheit (7) in der Lage ist, die elektrische Energie an die zweite Leitereinheit (8) zu übertragen, wobei die erste Leitereinheit (7) in Kontakt mit der zweiten Leitereinheit (8) angeordnet ist, wobei die elektrische Energie durch die Wirkung des Gleitens der ersten Leitereinheit (7) auf die zweite Leitereinheit (8) übertragen wird, und wobei die erste und die zweite Leitereinheit (7, 8) entsprechende leitende Abschnitte (11a 11b) aufweisen, die in Kontakt miteinander angeordnet sind;
**dadurch gekennzeichnet, dass** die ersten und zweiten Leitereinheiten (7, 8) ein erstes bzw. ein zweites plattenförmiges Element (9, 10) aufweisen, wobei die leitenden Abschnitte (11a 11b) die Art von Bahnen (13a, 13b) sind, die ein geschlossenes Profil definieren und auf den plattenförmigen Elementen (9, 10) selbst ausgebildet sind, dadurch, dass die plattenförmigen Elemente (9, 10) ein entsprechendes Durchgangsloch (12) aufweisen, das auf die Nabe (3) aufgesetzt werden kann, das erste plattenförmige Element (9) mit der Nabe (3) verriegelt ist und das zweite plattenförmige Element (10) mit der Nabe selbst im Leerlauf verbunden ist, und dadurch, dass das Rad (1) Mittel (15, 16) zur gegenseitigen Annäherung der leitenden Abschnitte (11a 11b) umfasst, die mindestens ein ferromagnetisches Element (15), das mit einem der leitenden Abschnitte (11a 11b) verbunden ist, und mindestens ein magnetisches Element (16), das mit dem anderen der leitenden Abschnitte (11a 11b) verbunden ist, aufweisen.

2. Fahrzeug (1) nach Anspruch 1, **dadurch gekennzeichnet, dass** jeder der leitenden Abschnitte (11a 11b) ein Paar der ineinander angeordneten und voneinander beabstandeten Bahnen (13a, 13b) umfasst.

3. Fahrzeug (1) nach Anspruch 1 oder 2, **dadurch gekennzeichnet, dass** das ferromagnetische Element (15) mit dem ersten plattenförmigen Element (9) verbunden ist und dass das magnetische Element (16) mit dem zweiten plattenförmigen Element (10) auf der gegenüberliegenden Seite des entsprechenden leitenden Abschnitts (11b) verbunden ist.

4. Fahrzeug (1) nach Anspruch 3, **dadurch gekennzeichnet, dass** die Annäherungsmittel (15, 16) mindestens ein haltendes Element (18) umfassen, das mindestens einen Unterbringungssitz (17) des mindestens einen magnetischen Elements (16) definiert.

5. Fahrzeug (1) nach Anspruch 4, **dadurch gekennzeichnet, dass** das haltende Element (18) mindestens ein ringförmiges Element (24) umfasst, das im Leerlauf auf die Nabe (3) montiert und mit dem Rahmen (4) verriegelt werden kann.

6. Fahrzeug (1) nach einem oder mehreren der vorstehenden Ansprüche, **dadurch gekennzeichnet, dass** das magnetische Element (16) Neodym enthält.

## Revendications

1. Véhicule, étant une bicyclette ou un cyclomoteur, comprenant :
- un cadre (4) et
- au moins une roue (1) comprenant une structure porteuse de charge (2) comportant un moyeu (3) destiné à être associé de manière rotative au cadre (4) et au moins un dispositif générateur d'énergie électrique (5) verrouillé avec ladite structure porteuse de charge (2),
- un moyen de transmission d'énergie électrique (7, 8) dudit dispositif générateur (5) à un dispositif utilisateur (6) associé audit cadre (4) et comprenant une première unité conductrice (7) verrouillée avec ledit moyeu (3) et connectée audit dispositif générateur (5) et une seconde unité conductrice (8) verrouillée avec ledit cadre (4) et connectée à au moins un dispositif utilisateur (6), où ladite première unité conductrice (7) est apte à transférer l'énergie électrique à ladite seconde unité conductrice (8), où ladite première unité conductrice (7) est placée en contact avec ladite seconde unité conductrice (8), l'énergie électrique étant transférée par effet du coulissement de ladite première unité conductrice (7) sur ladite seconde unité conductrice (8) et où lesdites première et seconde unités conductrices (7, 8) comprennent des parties conductrices (11a, 11b) correspondantes placées en contact l'une avec l'autre ;
**caractérisé par le fait que** lesdites première et seconde unités conductrices (7, 8) comprennent un premier et un second élément en forme de feuille (9, 10) respectivement, où lesdites parties conductrices (11a, 11b) sont le type de pistes (13a, 13b) définissant un profil fermé et formé sur les éléments en forme de feuille (9, 10) eux-mêmes, **par le fait que** lesdits éléments en forme de feuille (9, 10) comprennent un trou traversant (12) respectif apte à être disposé sur ledit moyeu (3), le premier élément en forme de feuille (9) étant verrouillé avec ledit moyeu (3) et ledit second élément en forme de feuille (10) étant associé libre avec le moyeu lui-même, et **par le fait que** ladite roue (1) comprend un moyen d'approche réciproque (15, 16) desdites parties conductrices (11a, 11b) comportant au moins un élément ferromagnétique (15) associé à l'une desdites parties conductrices (11a, 11b) et au moins un élément magnétique (16) associé à l'autre desdites parties conductrices (11a, 11b).

2. Véhicule (1) selon la revendication 1, **caractérisé par le fait que** chacune desdites parties conductrices (11a, 11b) comprend une paire desdites pistes (13a, 13b) agencées l'une à l'intérieur de l'autre et espacées l'une de l'autre.

3. Véhicule (1) selon la revendication 1 ou 2, **caractérisé par le fait que** ledit élément ferromagnétique (15) est associé audit premier élément en forme de feuille (9) et que ledit élément magnétique (16) est associé audit second élément en forme de feuille (10) du côté opposé de la partie conductrice (11b) correspondante.

4. Véhicule (1) selon la revendication 3, **caractérisé par le fait que** ledit moyen d'approche (15, 16) comprend au moins un élément de maintien (18) définissant au moins un siège de logement (17) dudit au moins un élément magnétique (16).

5. Véhicule (1) selon la revendication 4, **caractérisé par le fait que** ledit élément de maintien (18) comprend au moins un élément annulaire (24) apte à être disposé libre sur ledit moyeu (3) et verrouillé avec ledit cadre (4).

6. Véhicule (1) selon une ou plusieurs des revendications précédentes, **caractérisé par le fait que** ledit élément magnétique (16) comprend du néodyme.
